# EUROPÄISCHE PATENTANMELDUNG

(11) **EP 3 483 570 A1**
(43) Veröffentlichungstag der Anmeldung: **15.05.2019**
(21) Anmeldenummer: 17201654.5
(22) Anmeldetag: 14.11.2017
(51) Int. Cl.: G01H 1/00, G01B 7/31

(54) **VERFAHREN UND VORRICHTUNG ZUM AUSRICHTEN EINES WELLENSTRANGS EINER MASCHINENANLAGE**

(71) Anmelder: Siemens Aktiengesellschaft, 80333 München (DE)
(72) Erfinder: EHEHALT, Ulrich, 45239 Essen (DE); LANGER, Marcel, 46149 Oberhausen (DE); PIEPER, Daniel, 45529 Hattingen (DE)

(57) **Zusammenfassung**

Die Erfindung betrifft ein Verfahren zum Ausrichten eines Wellenstrangs (2) einer Maschinenanlage (1), der mittels mehrerer Lager gelagert ist und der mehrere miteinander fest verbundene Wellenstrangelemente aufweist, mit den Schritten:
a) Ortsfestes Anordnen von mindestens einem Sensor (21, 23) an einer dem Sensor (21, 23) zugeordneten Messposition (25 bis 28) zum Messen von Biegewechselspannungen des Wellenstrangs (2);
b) Messen von im Betrieb der Maschinenanlage (1) auftretenden Biegewechselspannungs-Messwerten mithilfe des mindestens einen Sensors (21, 23);
c) Berechnen von tatsächlichen Positionen der Lager des Wellenstrangs (2) unter Verwendung der Biegewechselspannungs-Messwerte und von Biegewechselspannungs-Erwartungswerten;
d) Vergleichen, ob die tatsächlichen Positionen der Lager innerhalb von mindestens einem vorher festgelegten dem jeweiligen Lager zugeordneten Grenzwerte liegen, innerhalb dem das jeweilige Lager angeordnet sein soll;
e) Korrigieren der tatsächlichen Position von mindestens einem der Lager, wenn die jeweilige tatsächliche Position des jeweiligen Lagers außerhalb von mindestens einem der jeweiligen Grenzwerte liegt, sodass die jeweilige neue Position des Lagers innerhalb der jeweiligen Grenzwerte liegt.

## Beschreibung

Die Erfindung betrifft ein Verfahren und eine Vorrichtung zum Ausrichten eines Wellenstrangs einer Maschinenanlage.

Eine Maschinenanlage, wie beispielsweise ein Kraftwerk zur Erzeugung von Elektrizität, weist einen elektrischen Generator und mindestens eine Turbine auf, wobei die Turbine den Generator antreibt. Hierzu sind die Turbine und der Generator auf einem gemeinsamen Wellenstrang angeordnet. Es kann vorteilhaft sein entlang des Wellenstrangs mehrere Kupplungen vorzusehen, um einzelne Wellenstrangabschnitte miteinander zu kuppeln. Beispielhaft können an den Wellenstrangabschnitten unterschiedliche Komponenten der Maschinenanlage, wie beispielsweise eine Hochdruckturbine, eine Mitteldruckturbine oder eine Niederdruckturbine, angeordnet sein.

Der Wellenstrang ist in der Maschinenanlage mittels mehrerer Lager gelagert. Zumeist weist einer der Wellenstrangabschnitte in den Bereichen seiner Längsenden jeweils eines der Lager auf. Die Wellenstrangabschnitte sind im Betrieb der Maschinenanlage mittels der Kupplungen fest miteinander verbunden, wodurch der gesamte Wellenstrang statisch überbestimmt gelagert ist. Dies bewirkt, dass mittels einer Änderung einer Lagerposition von einem der Lager in einer vertikalen Richtung und/oder in einer horizontalen Richtung die Lagerlasten und die Biegewechselspannungen beeinflussbar sind. Es kann vorkommen, dass sich die Lagerposition im Laufe des Betriebs der Maschinenanlage verändert, wodurch sich auch die Lagerlasten der Lager und die Biegewechselspannungen des Wellenstrangs ändern. Aufgrund der Änderung der Lagerlasten können die Lager frühzeitig ausfallen, oder es kann zu Beschädigungen der Maschinenanlage kommen. Änderungen in den Biegewechselspannungen können zu ungewollten Schwingungen bei verschiedenen Rotationsgeschwindigkeiten des Wellenstrangs führen. Diese Schwingungen können sich bis hin zum Totalausfall der Maschinenanlage hochschaukeln.

Aufgrund dessen wird die Lagerposition der einzelnen Lager in regelmäßigen Abständen überprüft. Die Überprüfung erfolgt herkömmlich mittels eines Entkuppelns der einzelnen Wellenstrangabschnitte bei Stillstand des Wellenstrangs und eines Vermessens von sogenannten Klaffungen in Axialrichtung und von sogenannten Versätzen in Radialrichtung. Auf Basis der Klaffungsvermessung und Versatzvermessung kann mit einfachen Rechnungen auf die Anordnung der Lager relativ zueinander geschlossen werden. Aufbauend auf den Ergebnissen der Berechnung wird anschließend eine physikalische Verschiebung der Lager vorgenommen. Diese Verfahren kann nur außerhalb des Betriebs des Wellenstrangs durchgeführt werden. Zudem ist das Öffnen der Kupplungen sehr zeitaufwändig und verringert dadurch die Verfügbarkeit der Maschinenanlage. Außerdem ist mit dem herkömmlichen Verfahren eine Überwachung der Lagerpositionen im Betrieb nicht möglich, wodurch eine mögliche Fehlstellung der Lager nur mittels einer planmäßigen Inspektion der Lager oder mittels einer Erkennung von Betriebsproblemen der Maschinenanlage erkannt werden kann.

Aufgabe der Erfindung ist es daher ein Verfahren und eine Vorrichtung zu schaffen, bei dem der Wellenstrang einfach ausgerichtet werden kann.

Die Aufgabe wird gelöst durch ein Verfahren mit den Merkmalen des Patentanspruchs 1 und durch eine Vorrichtung mit den Merkmalen des Patentanspruchs 15. Bevorzugte Ausführungsformen dazu sind in den weiteren Patentansprüchen angegeben.

Das erfindungsgemäße Verfahren zum Ausrichten eines Wellenstrangs einer Maschinenanlage, der mittels mehrerer Lager gelagert ist und der mehrere miteinander fest verbundene Wellenstrangelemente aufweist, weist folgende Schritte auf: a) Ortsfestes Anordnen von mindestens einem Sensor an einer dem Sensor zugeordneten Messposition zum Messen von Biegewechselspannungen des Wellenstrangs; b) Messen von im Betrieb der Maschinenanlage auftretenden Biegewechselspannungs-Messwerten mithilfe des mindestens einen Sensors; c) Berechnen von tatsächlichen Positionen der Lager des Wellenstrangs unter Verwendung der Biegewechselspannungs-Messwerte und von Biegewechselspannungs-Erwartungswerten; d) Vergleichen, ob die tatsächlichen Positionen der Lager innerhalb von mindestens einem vorher festgelegten dem jeweiligen Lager zugeordneten Grenzwert liegen, innerhalb dem das jeweilige Lager angeordnet sein soll; e) Korrigieren der tatsächlichen Position von mindestens einem der Lager, wenn die jeweilige tatsächliche Position des jeweiligen Lagers außerhalb von mindestens einem der jeweiligen Grenzwerte liegt, sodass die jeweilige neue Position des Lagers innerhalb der jeweiligen Grenzwerte liegt.

Dadurch, dass die Biegewechselspannungs-Messwerte im Betrieb der Maschinenanlage aufgenommen werden und daraus die tatsächliche Positionen der Lager errechnet werden können, ist ein Öffnen von Kupplungen zwischen den Wellenstrangelementen nicht mehr notwendig, um die Position der Lager zu bestimmen. Die Erfassung der Biegewechselspannungs-Messwerte kann beispielsweise zu einem gewünschten Zeitpunkt im Betrieb der Maschinenanlage erfolgen und beeinträchtigt den Betrieb der Maschinenanlage nicht. Besteht beispielsweise Verdacht auf eine mögliche Fehlstellung eines der Lager des Wellenstrangs, kann die Erfassung der Biegewechselspannungen im Laufe des Betriebs erfolgen. Erhärtet sich der Verdacht aufgrund von gewonnenen Erkenntnissen aus der Erfassung und dem Vergleich mit den Erwartungs-Biegewechselspannungen, kann die Korrektur der Position des Lagers vorgenommen werden. Die Korrektur kann beispielsweis bei der nächsten planmäßigen Wartung der Maschinenanlage durchgeführt werden. Hierzu können beispielsweis schon im Vorfeld der Wartung die benötigten Ersatzteile bestellt werden. Wird die Lagerposition herkömmlich bestimmt, kann erst bei der Wartung selbst auf mögliche Fehlstellungen reagiert werden. Das erfindungsgemäße Verfahren reduziert somit den Zeitaufwand der Ausrichtung des Wellenstrangs erheblich, wodurch der gesamte Betrieb der Maschinenanlage erleichtert ist und die Verfügbarkeit der Maschinenanlage erhöht wird. Die Maschinenanlage kann beispielhaft eine Dampfturbine und/oder eine Gasturbine aufweisen.

Als Grenzwerte für die Lager können neben der Position der Lager auch Werte repräsentativ für statische Lagerspannungen, statische Lagerlasten oder dynamische Lagerspannungen und dynamische Lagerlasten herangezogen werden. Dadurch, dass der Sensor ortsfest angeordnet ist, können mittels des erfindungsgemäßen Verfahrens sehr einfach statische Biegespannungen und dynamische Biegespannungen ermittelt und ausgewertet werden. Beispielhaft kann aus den statischen Spannungen die Position der Lager vorteilhaft ermittelt werden und aus den dynamischen Spannungen das Biegeschwingverhalten vorteilhaft ermittelt werden.

Zudem ist es beispielhaft denkbar, dass das erfindungsgemäße Verfahren bei bestehenden Maschinenanlagen nachgerüstet wird. Die Sensoren benötigen relativ wenig Platz und sind ortsfest in der Nähe des Wellenstrangs angeordnet. Dies führt dazu, dass das Nachrüsten der Sensoren relativ einfach durchgeführt werden kann. Ebenso ist es möglich die Biegewechselspannungs-Erwartungswerte mittels eines Modells des betreffenden Turbinenstrangs bei ursprünglichen Lagerpositionen nachträglich zu errechnen. Folglich kann auch ein Vergleich zwischen den gemessenen Biegewechselspannungs-Messwerten und den Biegewechselspannungs-Erwartungsmesswerten erfolgen, worauf anschließend auf die tatsächliche Position der Lager zurückgeschlossen werden kann. Bei bestehenden Maschinenanlagen lässt sich somit ohne großen Zeitaufwand und Kostenaufwand das erfindungsgemäße Verfahren durchführen. Das Ausrichten des Wellenstrangs ist dadurch auch bei der Nachrüstung einfach und kostengünstig durchführbar.

Vorteilhaft sind bei dem erfindungsgemäßen Verfahren die Sensoren ortsfest angeordnet, beispielhaft an dem Gehäuse des Wellenstrangs oder einem Lagergehäuse. Dadurch rotieren die Sensoren nicht mit dem Wellenstrang und sind nicht den Fliehkräften des Wellenstrangs ausgesetzt. Sensoren, wie beispielhaft Dehnmessstreifen, die üblicherweise an dem Wellenstrang angeordnet werden, rotieren mit dem Wellenstrang mit, wodurch sie dessen Fliehkräften ausgesetzt sind und sich von dem Wellenstrang lösen können. Zudem sind Sensoren, die an dem Wellenstrang angeordnet sind einem vorbeiströmenden Fluid und/oder einem Schmiermittel unmittelbar ausgesetzt. Das vorbeiströmende Fluid und das Schmiermittel können die Sensoren negativ beeinflussen oder sogar beschädigen. Die Erfassung von Messwerten mit negativ beeinflussten oder beschädigten Sensoren ist ungenauer und kann die aus den Messwerten erfolgende Berechnung verfälschen. Sind allerdings die Sensoren, wie in der erfindungsgemäßen Ausführungsform, ortsfest angeordnet, werden sie nicht durch die Rotation des Wellenstrangs beeinflusst und sind vergleichsweise gut vor dem vorbeiströmenden Fluid und dem Schmiermittel geschützt. Das Erfassen von Messwerten ist dadurch über eine längere Betriebszeit der Sensoren stabiler und genauer. Wodurch das Ausrichten des Wellenstrangs genauer und einfacher erfolgen kann.

Sind die Sensoren, beispielhaft Dehnmessstreifen, an dem Wellenstrang angeordnet, erfolgt eine Übertragung der ermittelten Messwerte beispielhaft mittels Schleifkontakte oder mittels einer Telemetrie. Die Schleifkontakte sind auf Dauer relativ anfällig und die Telemetrie erfordert zusätzliche Bauelemente wie beispielsweise einen Sender und Empfänger, wobei der Sender ebenso an dem rotierenden Wellenstrang angeordnet werden muss. Somit sind weiter zusätzliche Bauelemente den harschen Bedingungen an dem Wellenstrang ausgesetzt. Sind jedoch die Sensoren ortsfest beispielhaft an dem Gehäuse angeordnet, kann die Übertragung der ermittelten Messwerte relativ einfach beispielsweise mittels Kabelübertragung erfolgen. Dadurch ist das erfindungsgemäße Verfahren zusätzlich einfach aufgebaut.

Die Biegewechselspannungs-Erwartungsmesswerte sind sogenannte Sollwerte, die beispielhaft mittels mathematischer Verfahren errechnet werden. Hierbei entspricht die Position der Lager des Wellenstrangs der bei einer Auslegung der Maschinenanlage festgelegten Position. Die Biegewechselspannungs-Messwerte sind sogenannte Istwerte, die mittels der Sensoren bestimmt werden. Hierbei entspricht die Position der Lager des Wellenstrangs der tatsächlichen aktuellen Position der Lager.

Die Korrektur der Lagerposition kann beispielsweise bei einer planmäßigen Wartung der Maschinenanlage durchgeführt werden. Wird allerdings mittels des erfindungsgemäßen Verfahrens festgestellt, dass die Position von mindestens einem Lager außerhalb der jeweiligen vorher festgelegten Grenzwerte liegt, kann eine Wartung gezielt erfolgen, um die Maschinenanlage vor einer größeren Beschädigung zu bewahren.

Bevorzugt sind die Sensoren magnetostriktive Sensoren. Einer der magnetostriktiven Sensoren erzeugt ein hochfrequentes Magnetfeld mittels einer Sendespule und durchflutet die Oberfläche des Wellenstrangs mit diesem Magnetfeld. Zudem weist der magnetostriktive Sensor eine oder mehrere Empfängerspulen auf, welche mit der Sendespule einen magnetischen Kreis bilden und zur Detektion von Biegespannungen speziell angeordnet sind. Mit der speziellen Anordnung der Sendespule und Empfängerspulen kann die magnetische Suszeptibilität an der Oberfläche des Wellenstrangs bestimmt werden. Weil aufgrund des Villari-Effektes die magnetische Suszeptibilität eines Körpers von seiner mechanischen Spannung abhängt, hängt auch das von der Empfangsspule ermittelte Signal von der mechanischen Spannung der Oberfläche des Wellenstrangs ab. Der magnetostriktive Sensor gibt beispielhaft ein analoges Ausgangssignal aus, das proportional zu der Biegespannung des Wellenstrangs ist. Werden über die Zeit mehrere Ausgangssignale ausgegeben, die jeweils proportional zu der Biegespannung des Wellenstrangs sind, lässt sich die daraus die Biegewechselspannung bestimmen. Allerdings sollte dabei darauf geachtet werden, dass eine ausreichende Messpunktdichte oder ausreichende Abtastfrequenz vorhanden ist, beziehungsweise die Messung kontinuierlich erfolgt, damit bei hohen Rotationsgeschwindigkeiten eventuelle hohe Frequenzen der Biegewechselspannungen gemessen werden können. Dadurch, dass das Ausgangssignal zu den Biegespannungen proportional ist, kann die anschließende Datenverarbeitung einfach und schnell durchgeführt werden, wodurch das gesamte Verfahren einfach und schnell durchführbar ist.

Zusätzlich ist denkbar, dass die gemessenen Spannungen mittels eines Bandpassfilters gefiltert werden, der ein um die Eigenfrequenz herum angeordnetes Frequenzband passieren lässt und/oder dass eine Fourier Transformation, insbesondere eine Fast-Fourier-Transformation der ermittelten Spannungen durchgeführt wird. Damit können die Spannungsamplituden unterschiedlicher Schwingungsmoden vorteilhaft einfach bestimmt werden.

Bevorzugt sind an einer der Messstellen mehrere Sensoren im Wesentlichen in einer Ebene des Wellenstrangs in Umfangsrichtung um den Wellenstrang angeordnet. Eine der Ebenen des Wellenstrangs kann beispielsweise eine gedachte Ebene sein, die den Wellenstrang an einer bestimmten axialen Position, beispielsweise an einer der Kupplungen oder an einem der Lager schneidet, sein. Vorteilhaft können jedoch an einer der Messstellen mehrere Sensoren, beispielhaft zwei, drei oder vier Sensoren angeordnet sein. Vorteilhaft sind die Sensoren dabei mit demselben Abstand zu dem Wellenstrang und mit einem Winkel zueinander um den Wellenstrang angeordnet. Sind beispielhaft zwei oder vier Sensoren an einer der Messstellen angeordnet, können sie vorteilhaft mit dem Winken von 90° zueinander angeordnet sein. Dadurch, dass mehrere Sensoren an einer der Messstellen angeordnet sind, können die Spannungen an unterschiedlichen Positionen der Messstelle gleichzeitig ermittelt werden, wodurch eine genauere Berechnung der tatsächlichen Biegewechselspannungen an der jeweiligen Messstelle ermöglicht ist. Dadurch kann die Ausrichtung des Wellenstrangs in zwei senkrecht zur Drehachse stehenden Richtungen, beispielsweise in der vertikalen Raumrichtung und in der horizontalen Raumrichtung, genauer durchgeführt werden.

Bevorzugt sind die Sensoren an unterschiedlichen Axialpositionen des Wellenstrangs angeordnet. Denkbar ist beispielhaft, dass der Wellenstrang an unterschiedlichen axialen Ebenen mehrere Messstellen aufweist, wodurch mehrere der Sensoren an verschiedenen axialen Positionen des Wellenstrangs angeordnet sind. Bevorzugte Positionen für Messstellen können hier ebenso in der Nähe von den Kupplungen oder von den Lagern des Wellenstrangs sein. Dadurch, dass die Sensoren an unterschiedlichen Axialpositionen des Wellenstrangs angeordnet sind, lassen sich die auftretenden Biegewechselspannungen entlang des gesamten Wellenstrangs ermitteln. Dadurch kann die Ausrichtung des Wellenstrangs gezielter erfolgen, weshalb das Verfahren des Ausrichtens des Wellenstrangs insgesamt vereinfacht ist.

Bevorzugt werden die Biegewechselspannungs-Erwartungswerte mittels einer Finite Elemente Methode bestimmt. Die Finite Elemente Methode ist ein allgemeines bei unterschiedlichen physikalischen Aufgabenstellungen angewendetes numerisches Verfahren, mittels dem auch die Biegewechselspannungs-Erwartungswerte des Wellenstrangs relativ genau bei unterschiedlichen Betriebsbedingungen der Maschinenanlage errechnet werden können. Dadurch, dass die Biegewechselspannungs-Erwartungswerte für unterschiedliche Betriebsbedingungen des Wellenstrangs relativ einfach und genaue bestimmt werden können, können eben jene unterschiedlichen Betriebsbedingungen mittels des erfindungsgemäßen Verfahrens analysiert werden. Worauf aufbauend die Ausrichtung des Wellenstrangs erfolgen kann. Dadurch ist eine ganzheitliche Analyse der Ausrichtung des Wellenstrangs ermöglicht. Die Biegewechselspannungs-Erwartungswerte können auch mittels anderer Methoden oder anderer numerischen Verfahren, wie beispielsweise mittels Finite Differenzen oder Übertragungsmatrizen, bestimmt werden.

Bevorzugt wird ein vorher festgelegtes Betriebsschema mit unterschiedlichen Rotationsgeschwindigkeiten der Maschinenanlage abgefahren. Beispielhaft kann das Betriebsschema ein Anfahren der Maschinenanlage, ein Halten der Maschinenanlage bei einer bestimmten Drehzahl des Wellenstrangs, ein Beschleunigen des Wellenstrangs von einer niedrigeren Drehzahl auf eine höhere Drehzahl, ein Bremsen des Wellenstrangs von einer höheren Drehzahl auf eine niedrigere Drehzahl, oder ein Abfahren der Maschinenanlage beinhalten. Mittels des gezielten Anfahrens von eventuell kritischen Rotationsgeschwindigkeiten des Wellenstrangs der Maschinenanlage können Fehlstellungen der Lager vorteilhaft erkannt werden. Denkbar ist auch, dass im normalen Betrieb der Maschinenanlage, wenn die Rotationsgeschwindigkeiten des Wellenstrangs kritische Rotationsgeschwindigkeiten passiert das Erfassen von Biegewechselspannungs-Erwartungsmesswerten erfolgen kann. Wodurch das Verfahren zum Ausrichten des Wellenstrangs in den normalen Betrieb der Maschinenanlage integriert werden kann. Dadurch ist das Verfahren zusätzlich einfacher durchführbar.

Vorteilhaft werden im Betriebsschema vorbestimmte Resonanzdrehzahlen angefahren, da bei diesen Resonanzdrehzahlen besonders große Spannungen zu erwarten sind und mittels einer Messung dieser Spannungen etwaige Abweichungen von den erwarteten Spannungen besonders vorteilhaft ermittelbar sind. Grundsätzlich ist das Messen bei jeder Drehzahl des Wellenstrangs durchführbar.

Bevorzugt erfolgt in Schritt e) die Korrektur der jeweiligen Positionen der jeweiligen Lager im Betrieb der Maschinenlage automatisiert. Es ist beispielhaft denkbar, dass mindestens eines der Lager des Wellenstrangs eine mechanische Korrekturvorrichtung aufweist, die Steuerungsbefehle entgegennehmen kann und aufgrund der Befehle die Korrektur der Position der Lager vornehmen kann, sodass die Lager anschließend wieder innerhalb der vorher festgelegten Grenzwerte angeordnet sind. Denkbar ist beispielhaft, dass im Betrieb der Maschinenanlage mittels des erfindungsgemäßen Verfahrens die Fehlstellung eines der Lager erkannt wird, die Maschinenanlage heruntergefahren wird und anschließend mittels der Korrekturvorrichtung die Position des entsprechenden Lagers korrigiert wird. Ebenso ist es denkbar, dass die Korrektur während des Betriebs der Maschinenanlage erfolgt, insofern dies möglich ist. Insgesamt ist dadurch das Verfahren zum Ausrichten des Wellenstrangs sehr einfach und genau durchführbar und lässt sich sehr gut in den Betriebsablauf der Maschinenanlage integrieren.

Bevorzugt wird in Schritt e) die Korrektur der Position von mindestens einem der Lager mittels der ermittelten Biegewechselspannungs-Messwerte automatisiert geregelt. Denkbar ist beispielhaft, dass im Betrieb der Maschinenanlage in bestimmten Intervallen automatisch Biegewechselspannungs-Messwerte aufgenommen werden, diese mit den Biegewechselspannungs-Erwartungsmesswerten automatisch verglichen werden und die daraus resultierende Korrektur der Position der Lager im Betrieb der Maschinenanlage automatisch erfolgt. Somit wird die Position der Lager im Betrieb automatisiert geregelt. Dadurch, dass die Korrektur der Position von mindestens einem der Lager automatisiert geregelt wird, ist der Wellenstrangs während des gesamten Betriebs der Maschinenanlage vorteilhaft ausgerichtet. Die Regelung lässt sich ebenso einfach in den Betrieb der Maschinenanlage integrieren, wodurch das Ausrichten des Wellenstrangs sehr einfach durchgeführt werden kann. Zudem erhöht eine Regelung der Ausrichtung des Wellenstrangs die Betriebssicherheit der Maschinenanlage.

Bevorzugt weist das Verfahren zum Ausrichten des Wellenstrangs zusätzlich den folgenden Schritt auf:
a0) Grobkalibrieren der magnetostriktiven Sensoren an einer Welle, die mittels einer Prüfmaschine mit einer definierten Spannung belastet wird. Denkbar ist beispielhaft, dass die Grobkalibrierung der magnetostriktiven Sensoren außerhalb der Maschinenanlage, beispielsweise am Herstellungsort der magnetostriktiven Sensoren erfolgt. Dadurch lässt sich der Aufwand an der Maschinenanlage reduzieren. Der Schritt a0) ist bevorzugt vor dem Schritt a) durchzuführen. Besonders bevorzugt weist das Verfahren zum Ausrichten des Wellenstrangs, wobei die Maschinenanlage einen Generator aufweist, zusätzlich den folgenden Schritt auf: a1) Feinkalibrieren der magnetostriktiven Sensoren beim Rotieren des Wellenstrangs unter Heranziehen einer an einer der Messstellen bestimmten Spannung, die unter Heranziehen der vom Generator abgegebenen Leistung bestimmt wird. Von der vom Generator abgegebenen Leistung kann auf das anliegende Drehmoment zurückgeschlossen werden. Von dem Drehmoment kann auf die Spannungen zurückgeschlossen werden. Somit kann vorteilhaft das Feinkalibrieren der Sensoren am realen jeweiligen Wellenstrang beispielhaft auch im Betrieb des Wellenstrangs durchgeführt werden. Der Schritt a1) ist bevorzugt nach dem Schritt a) und vor dem Schritt b) durchzuführen. Denkbar ist auch, dass das Feinkalibrieren der magnetostriktiven Sensoren unter Heranziehen einer berechneten Leistung der Turbine erfolgt.

Bevorzugt weist die Maschinenanlage mehrere thermische Strömungsmaschinen auf. An dem Wellenstrang der Maschinenanlage können beispielhaft eine Hochdruckturbine, eine Mitteldruckturbine oder eine Niederdruckturbine angeordnet sein. Denkbar ist auch, dass weitere Strömungsmaschinen an dem Wellenstrang, wie beispielsweise Gasturbinen, oder andere Bauelemente, wie beispielsweise Generatoren, angeordnet sind. Beispielhaft ist jede dieser Strömungsmaschinen an einem Wellenstrangabschnitt angeordnet, der wiederum mittels der Kupplungen mit den anderen Wellenstrangabschnitten fest verbunden ist und dadurch den Wellenstrang bildet. Vorteilhaft wird jedes der Lager des jeweiligen Wellenstrangabschnitts ausgerichtet. Einer der Wellenstrangabschnitte kann beispielhaft ein Lager, zwei Lager, mehrere Lager oder kein Lager aufweisen.

Bevorzugt sind die Messstellen in einem frei liegenden Bereich des Wellenstrangs und/oder im Bereich eines der Sensoren zugänglichen Abschnitts des Wellenstrangs und/oder in einem Bereich eines rechnerisch bestimmten Spannungsmaximums angeordnet. Dadurch, dass die Sensoren in dem frei liegenden Bereich des Wellenstrangs angeordnet werden, ist eine Montage der Sensoren vereinfacht. Besonders bei der Nachrüstung können die Sensoren an den frei liegenden Bereichen des Wellenstrangs angeordnet werden. Zudem ist es für die Wartung der Sensoren vorteilhaft, diese an zugänglichen Bereichen anzuordnen. Denkbar ist auch, dass die Messstellen im Bereich eines Lagergehäuses von einem der Wellenstrangabschnitte des Wellenstrangs angeordnet sind.

Bevorzugt sind die Messstellen im Bereich von Lagerstellen und/oder Kupplungen angeordnet. Die Sensoren werden bevorzugt im Bereich der Lager, der Kupplungen und/oder von Schaufelfüßen angeordnet. Hierbei handelt es sich vorteilhaft um Positionen, die besonders gegen Spannungsschäden anfällig sind. Dadurch, dass die Sensoren an diesen Positionen angeordnet sind, lassen sich diese anfälligen Positionen vorteilhaft überwachen. Außerdem ist es denkbar, dass die Messstellen in Bereichen des Wellenstrangs angeordnet sind, an denen der Wellenstrang einen kleineren Durchmesser als in anderen Bereichen aufweist, wodurch die Messung besonders genau durchführbar ist, da in diesen Bereichen besonders hohe Spannungen auftreten.

Bevorzugt ist ein Computerprogrammprodukt insbesondere digitales Speichermedium, mit ausführbaren Programminstruktionen zur Durchführung eines Verfahrens nach einem der vorhergehenden Patentansprüche vorgesehen.

Die erfindungsgemäße Vorrichtung weist zum Ausrichten eines Wellenstrangs einer Maschinenanlage, der mittels mehrerer Lager gelagert ist, mindestens einen Sensor, der ortsfest an einer ihm zugeordneten Position des Wellenstrangs an einer Messstelle angeordnet ist und eingerichtet ist Biegewechselspannungs-Messwerte des Wellenstrangs im Betrieb aufzunehmen, eine Auswerteeinheit, die eingerichtet ist aus den aufgenommenen Biegewechselspannungs-Messwerten mindestens eine Position eines der Lager des Wellenstrangs zu errechnen und zusätzlich eingerichtet ist die tatsächliche Position des Lagers mit mindestens einem vorher festgelegten dem Lager zugeordneten Grenzwerten zu vergleichen, und eine Korrekturvorrichtung auf, die eingerichtet ist mindestens die tatsächliche Position eines der Lager zu korrigieren, insofern die jeweilige tatsächliche Position des jeweiligen Lagers außerhalb der jeweiligen Grenzwerte liegt, sodass die jeweilige neue Position des Lagers innerhalb der jeweiligen Grenzwerte liegt. Die Auswerteeinheit ist beispielhaft außerhalb des Wellenstrangs angeordnet und die Messwerte der Sensoren werden via Kabel von den Sensoren an die Auswerteeinheit übertragen. Erkennt die Auswerteeinheit, dass die Position eines der Lager außerhalb der dem Lager zugeordneten Grenzwerte liegt, kann sie beispielhaft eine Warnung diesbezüglich an den zuständigen Betreiber ausgeben. Der Betreiber kann daraufhin die Korrekturvorrichtung ansteuern, die die Position des betreffenden Lagers korrigiert. Ebenso ist es denkbar, dass die Auswerteeinheit die Korrekturvorrichtung direkt ansteuert, sobald die Auswerteeinheit eine Fehlstellung eines der Lager erkennt. Die erfindungsgemäße Vorrichtung kann beispielsweise ebenso nachgerüstet werden.

Im Folgenden werden anhand der beigefügten schematischen Zeichnungen das erfindungsgemäße Verfahren und die erfindungsgemäße Vorrichtung näher erläutert.
Die Figur 1 zeigt eine Seitenansicht eines Wellenstrangs.
Die Figur 2 zeigt eine Ausführungsform einer Anordnung von Sensoren an dem Wellenstrang.
Die Figur 3 zeigt ein Ablaufdiagramm für ein Bestimmen von Korrekturwerten.
Die Figur 4 zeigt ein Ablaufdiagramm für das erfindungsgemäße Verfahren.

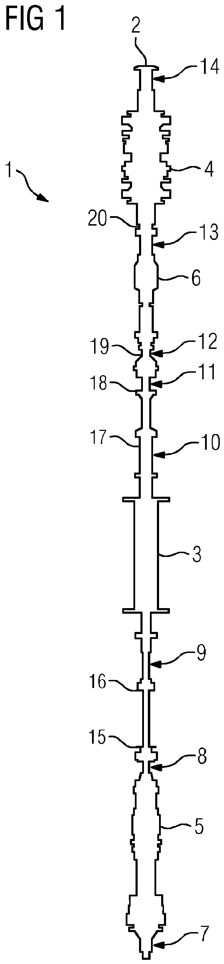

Wie es aus der Figur 1 ersichtlich ist, weist der Wellenstrang 2 einer Maschinenanlage 1 einen Generator 3, eine erste Strömungsmaschine 4, eine zweite Strömungsmaschine 5 und eine dritte Strömungsmaschine 6 auf. Dabei sind der Generator 3 und die Strömungsmaschinen 4, 5, 6 auf dem gemeinsamen Wellenstrang 2 angeordnet. Der Wellenstrang 2 kann beispielhaft aus einer Mehrzahl von Wellenstrangelementen bestehen, die jedoch zumeist mittels Kupplungen fest miteinander verbunden sind und dadurch den Wellenstrang 2 bilden. Die erste Strömungsmaschine 4 und die zweite Strömungsmaschine 5 sind im vorliegenden Ausführungsbeispiel an den Längsenden des Wellenstrangs 2 angeordnet und der Generator 3 ist zwischen der zweiten Strömungsmaschine 5 und der dritten Strömungsmaschine 6 angeordnet, folglich ist die dritte Strömungsmaschine 6 zwischen der ersten Strömungsmaschine 4 und dem Generator 3 angeordnet. Der Wellenstrang 2 weist eine erste Lagerstelle 7, eine zweite Lagerstelle 8, eine dritte Lagerstelle 9, eine vierte Lagerstelle 10, eine fünfte Lagerstelle 11, eine sechste Lagerstelle 12, eine siebte Lagerstelle 13 und eine achte Lagerstelle 14 auf. Zudem weist der Wellenstrang 2 eine erste Messstelle 15, eine zweite Messstelle 16, eine dritte Messstelle 17, eine vierte Messstelle 18, eine fünfte Messstelle 19 und eine sechste Messstelle 20 auf, wobei die Messstellen 15 bis 20 jeweils an einer einer Messtechnik zugänglichen Position angeordnet sind.

Es ist erkennbar, dass die Messstellen 15 bis 20 in der Nähe der Lagerstellen 8 bis 13 angeordnet sind. Dies ergibt sich einerseits daraus, dass an den Lagerstellen 8 bis 13 für die Messtechnik vorteilhaft zugängliche Messstellen 15 bis 20 einfach vorgesehen werden können und andererseits daraus, dass zumeist die Lagerstellen 8 bis 13 für Spannungen des Wellenstrangs 2 kritische Positionen darstellen.

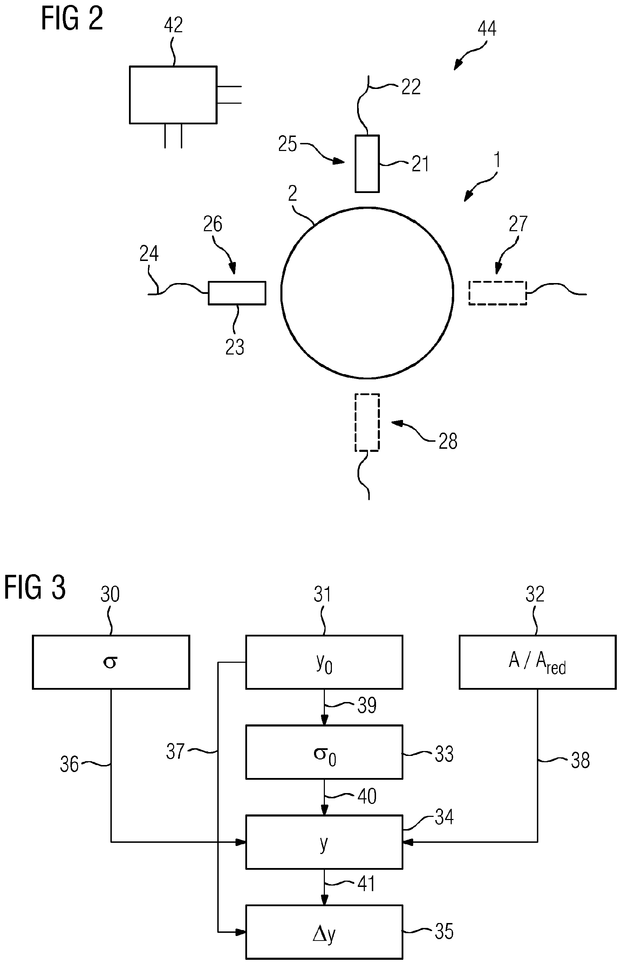

Die Figur 2 zeigt einen Schnitt durch den in Figur 1 dargestellten Wellenstrang 2. Dabei ist der Wellenstrang 2 an einer der Messstellen 15 bis 20 geschnitten. In Figur 2 ist eine erste Messposition 25, eine zweite Messposition 26, eine dritte Messposition 27 und eine vierte Messposition 28 ersichtlich. Als Messposition ist eine spezielle Anordnung eines Sensors 21, 23 um den Wellenstrang 2 an einer Messstelle 15 bis 20 zu verstehen. Folglich können an einer Messstelle 15 bis 20 ein oder mehrere Sensoren 21, 23 um den Wellenstrang 2 angeordnet werden. Im vorliegenden Ausführungsbeispiel sind ein erster Sensor 21 mit einem ersten Kabel 22 und ein zweiter Sensor 23 mit einem zweiten Kabel 24 um den Wellenstrang 2 an der ersten Messposition 25 und an der zweiten Messposition 26 angeordnet. Zusätzlich ist in Figur 2 eine Anordnung von zwei weiteren Sensoren an der dritten Messposition 27 und an der vierten Messposition 28 angedeutet. Alle vier Messpositionen 25 bis 28 sind in einem Winkel von 90 Grad zueinander angeordnet und weisen jeweils denselben Abstand zu dem Wellenstrang 2 auf. Denkbar ist auch, dass ein anderes Ausführungsbeispiel weniger oder mehr Messpositionen aufweist und die Messpositionen in einem anderen Winkel zueinander angeordnet sind. Allerdings ist es für eine genaue Messung vorteilhaft, wenn mindestens zwei Messpositionen in einem Winkel von 90 Grad zueinander angeordnet sind. Zudem kann aus Redundanzgründen eine Mehrzahl von Sensoren an den Messstellen 15 bis 20 vorgesehen werden. Zudem zeigt die Figur 2 eine Auswerteeinheit 42, die einer Vorrichtung 44 zum Ausrichten des Wellenstrangs 2 zugeordnet ist. Die Auswerteeinheit 42 empfängt beispielhaft mittels einer drahtgebundenen oder drahlosen Datenübertragung die ermittelten Messwerte der Sensoren 21, 23 und wertet diese Messwerte aus. Hierzu kann die Auswerteeinheit 42 Hard- und/oder Softwarekomponenten aufweisen. Zudem kann die Auswerteeinheit beispielhaft automatisiert oder mittels einer manuellen Eingabe Steuerungssignale an eine Korrekturvorrichtung ausgeben. Die Korrekturvorrichtung korrigiert daraufhin die Position der Lager. Die Korrekturvorrichtung ist im vorliegenden Ausführungsbeispiel nicht dargestellt.

Im vorliegenden Ausführungsbeispiel sind die Sensoren magnetostriktive Sensoren 21, 23. Die magnetostriktiven Sensoren 21, 23 weisen eine Sendespule auf, mittels der ein Magnetfeld erzeugt wird. Die Oberfläche des Wellenstrangs 2 wird mit dem Magnetfeld durchflutet. Zudem weist der magnetostriktive Sensor 21, 23 eine Empfängerspule oder mehrere Empfängerspulen auf, die in einem magnetischen Kreis gemeinsam mit der Sendespule und der durchfluteten Oberfläche des Wellenstrangs 2 so geeignet angeordnet sind, dass damit die magnetische Suszeptibilität der Oberfläche des Wellenstrangs 2 bestimmt werden kann. Aufgrund des Villari Effektes hängt die magnetische Suszeptibiliät des Wellenstrangs 2 von seiner mechanischen Spannung ab. Wird die vorhandene Biegespannung über einen Zeitraum erfasst, lässt sich daraus die Biegewechselspannung bestimmen. Das von dem magnetostriktiven Sensors 21, 23 ausgegebene Signal ist dabei proportional zur auftretenden Spannung. Aus der Figur 2 ist zudem ersichtlich, dass zwischen den magnetostriktiven Sensoren 21, 23 und dem Wellenstrang 2 ein Luftspalt angeordnet ist. Dadurch kann das erfindungsgemäße Verfahren mit dem magnetostriktiven Sensor 21, 23 berührungsfrei durchgeführt werden, weshalb der magnetostriktive Sensor 21, 23 ortsfest an einem Gehäuse des Wellenstrangs angeordnet werden kann.

Die Figur 3 zeigt ein Flussdiagramm oder Ablaufdiagramm für ein Bestimmen von Korrekturwerten. Dabei weist das Ablaufdiagramm ein erstes Element 30, ein zweites Element 31, ein drittes Element 32, ein viertes Element 33, ein fünftes Element 34 und ein sechstes Element 35 auf. Die einzelnen Elemente 30 bis 35 sind dabei mit einem ersten Pfeil 36, einem zweiten Pfeil 37, einem dritten Pfeil 38, einem vierten Pfeil 39, einem fünften Pfeil 40 und einem sechsten Pfeil 41 miteinander verknüpft. Die einzelnen Elemente 30 bis 35 können für ihre nachfolgend beschriebenen Aufgaben/Funktionen jeweils Hard- und/oder Softwarekomponenten aufweisen. Das dargestellte Flussdiagramm stellt eine mögliche Herangehensweise dar, wie Korrekturwerte der Positionen der Lager identifiziert werden können.

Das Element 30 stellt die vom Sensor 21, 23 gemessenen aktuellen Biegespannungen σ an mindestens einer von den Messstellen 15 bis 20 bereit. Das Element 31 stellt die ursprünglich festgelegten Positionen, beispielhaft die vertikale Position und die horizontale Position, y₀ mindestens eines der Lager und das Element 32 Einflusskoeffizienten A oder A_{red} bereit.

Aus den ursprünglich festgelegten Positionen der Lager y₀ ermittelt das Element 33 die Biegespannungs-Erwartungswerte σ₀. Das Flussdiagramm zeigt dies mittels des Pfeils 39. Das Element 34 bestimmt außerdem aus den aktuellen Biegespannungen σ, den Biegespannungs-Erwartungswerten σ₀ und den Einflusskoeffizienten A oder A_{red} die aktuelle Positionen der Lager y. Das Flussdiagramm stellt diese Entwicklung mittels der Pfeile 36, 40 und 38 dar. Vorteilhaft werden an allen Lagern des Wellenstrangs außer an zwei Lagern Korrekturen der Lagerposition vorgenommen.

Aus der aktuellen Position der Lager y bestimmt das Element 35 mittels der ursprünglich festgelegten Position der Lager y₀ die Korrektur der Position der Lager Δy. Im Flussdiagramm wird dies mittels der Pfeile 37 und 41 darstellt. Aus der Korrektur der Position der Lager Δy kann außerdem ein Stellsignal oder eine Gruppe von Stellsignalen bestimmt werden zur Anpassung der jeweiligen Position des Lagers. Abweichend vom vorliegenden Ausführungsbeispiel kann die Reihenfolge der Schritte auch eine anderen sein. So kann z.B. die Reihenfolge einzelner Schritte vertauscht sein oder es können auch mehrere Schritte zeitgleich ausgeführt werden, soweit dies sinnvoll ist. Außerdem kann auch für mehrere Lager das Verfahren gleichzeitig oder sukzessiv angewandt werden.

Verschiedene Ansätze zur Bestimmung der Korrektur der Position der Lager Δy könnten wie folgt errechnet werden. Bei der Messung von Spannungen an M = N -2 Positionen Δy = A⁻¹(σ-σ₀). Bei der Messung von Spannungen an M > N - 2 Positionen Δy = (A^{T}A)⁻¹A^{T} (σ-σ₀). Bei der Messung von Spannungen an M < N - 2 Positionen Δy = A_{red}⁻¹(σ - σ₀). Hierbei entspricht M der Anzahl der Messstellen und N der Anzahl der Lagerstellen. Neben den hier beschriebenen Ansätzen sind noch weitere Ansätze zur Bestimmung der Korrektur der Position der Lager Δy denkbar So kann die Ausrichtung des Wellenstranges 2 deutlich vereinfacht werden.

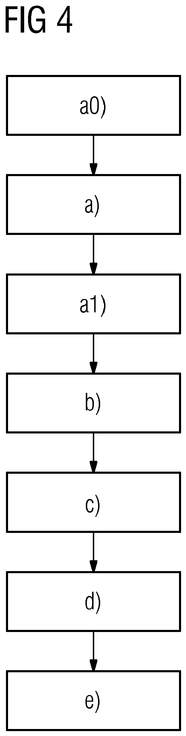

Die Figur 4 zeigt ein Ablaufdiagramm für das erfindungsgemäße Verfahren. Dabei wird in einem optionalen Schritt a0) eine Grobkalibrierung von den Sensoren 21, 23 an einer Welle, die mittels einer Prüfmaschine mit einer definierten Spannung belastet wird, dargestellt. Die Grobkalibrierung kann beispielhaft außerhalb der Maschinenanlage erfolgen. Anschließend erfolgt in einem Schritt a) ein ortsfestes Anordnen mindestens einer der Sensoren 21, 23 an dem Wellenstrang. Als nächstes erfolgt in einem optionalen Schritt a1) eine Feinkalibrierung der Sensoren 21, 23. Anschließend werden in einem Schritt b) Biegewechselspannungs-Messwerte erfasst, worauf aufbauend in einem Schritt c) eine tatsächliche Position mindestens eines der Lager berechnet wird. Als nächstes wird in einem Schritt d) die tatsächliche Position der Lager mit vorher festgelegten Grenzwerten verglichen, worauf aufbauend in einem Schritt f) die tatsächliche Position von mindestens einem der Lager korrigiert wird, sodass eine jeweilige neue Position der Lager innerhalb der Grenzwerte liegt. Die Reihenfolge der Schritte kann auch vertauscht werden, zudem können weitere Schritte hinzugefügt werden oder einzelne Schritte in mehrere Schritte aufgeteilt werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Ausrichten eines Wellenstrangs (2) einer Maschinenanlage (1), der mittels mehrerer Lager gelagert ist und der mehrere miteinander fest verbundene Wellenstrangelemente aufweist, mit den Schritten:
a) Ortsfestes Anordnen von mindestens einem Sensor (21, 23) an einer dem Sensor (21, 23) zugeordneten Messposition (25 bis 28) zum Messen von Biegewechselspannungen des Wellenstrangs (2);
b) Messen von im Betrieb der Maschinenanlage (1) auftretenden Biegewechselspannungs-Messwerten mithilfe des mindestens einen Sensors (21, 23);
c) Berechnen von tatsächlichen Positionen der Lager des Wellenstrangs (2) unter Verwendung der Biegewechselspannungs-Messwerte und von Biegewechselspannungs-Erwartungswerten;
d) Vergleichen, ob die tatsächlichen Positionen der Lager innerhalb von mindestens einem vorher festgelegten dem jeweiligen Lager zugeordneten Grenzwert liegen, innerhalb dem das jeweilige Lager angeordnet sein soll;
e) Korrigieren der tatsächlichen Position von mindestens einem der Lager, wenn die jeweilige tatsächliche Position des jeweiligen Lagers außerhalb von mindestens einem der jeweiligen Grenzwerte liegt, sodass die jeweilige neue Position des Lagers innerhalb der jeweiligen Grenzwerte liegt.

2. Verfahren zum Ausrichten des Wellenstrangs (2) gemäß Anspruch 1,
wobei die Sensoren (21, 23) magnetostriktive Sensoren sind.

3. Verfahren zum Ausrichten des Wellenstrangs (2) gemäß Anspruch 1 oder 2,
wobei an einer der Messstellen (15 bis 20) mehrere Sensoren (21, 23) im Wesentlichen in einer Ebene des Wellenstrangs (2) in Umfangsrichtung um den Wellenstrang (2) angeordnet sind.

4. Verfahren zum Ausrichten des Wellenstrangs (2) gemäß einem der vorangehenden Ansprüche,
wobei die Sensoren (21, 23) an unterschiedlichen Axialpositionen des Wellenstrangs (2) angeordnet sind.

5. Verfahren zum Ausrichten des Wellenstrangs (2) gemäß einem der vorangehenden Ansprüche,
wobei die Biegewechselspannung-Erwartungswerte mittels einer Finite Elemente Methode bestimmt werden.

6. Verfahren zum Ausrichten des Wellenstrangs (2) gemäß einem der vorangehenden Ansprüche,
wobei ein vorher festgelegtes Betriebsschema mit unterschiedlichen Rotationsgeschwindigkeiten der Maschinenanlage (1) abgefahren wird.

7. Verfahren zum Ausrichten des Wellenstrangs (2) gemäß einem der vorangehenden Ansprüche,
wobei in Schritt e) die Korrektur der jeweiligen Positionen der jeweiligen Lager im Betrieb der Maschinenlage automatisiert erfolgt.

8. Verfahren zum Ausrichten des Wellenstrangs (2) gemäß einem der vorangehenden Ansprüche,
wobei in Schritt e) die Korrektur der Position von mindestens einem der Lager mittels der ermittelten Biegewechselspannungs-Messwerte automatisiert geregelt wird.

9. Verfahren zum Ausrichten des Wellenstrangs (2) gemäß Anspruch 2, mit dem Schritt:
a0) Grobkalibrieren der magnetostriktiven Sensoren (21, 23) an einer Welle, die mittels einer Prüfmaschine mit einer definierten Spannung belastet wird.

10. Verfahren zum Ausrichten des Wellenstrangs (2) gemäß Anspruch 2,
wobei die Maschinenanlage einen Generator aufweist, mit dem Schritt:
a1) Feinkalibrieren der magnetostriktiven Sensoren (21, 23) beim Rotieren des Wellenstrangs (2) unter Heranziehen einer an einer der Messstellen (15 bis 20) bestimmten Spannung, die unter Heranziehen der vom Generator (3) abgegebenen Leistung bestimmt wird.

11. Verfahren zum Ausrichten des Wellenstrangs (2) gemäß einem der vorangehenden Ansprüche,
wobei die Maschinenanlage (1) mehrere thermische Strömungsmaschinen (4 bis 6) aufweist.

12. Verfahren zum Ausrichten des Wellenstrangs (2) gemäß einem der vorangehenden Ansprüche,
wobei die Messstellen (15 bis 20) in einem frei liegenden Bereich des Wellenstrangs (2) und/oder im Bereich eines der Sensoren zugänglichen Abschnitts des Wellenstrangs (2) und/oder in einem Bereich eines rechnerisch bestimmten Spannungsmaximums angeordnet sind.

13. Verfahren zum Ausrichten des Wellenstrangs (2) gemäß einem der vorangehenden Ansprüche,
wobei die Messstellen (15 bis 20) im Bereich von Lagerstellen (7 bis 14) und/oder Kupplungen angeordnet sind.

14. Computerprogrammprodukt insbesondere digitales Speichermedium, mit ausführbaren Programminstruktionen zur Durchführung eines Verfahrens nach einem der vorhergehenden Patentansprüche.

15. Vorrichtung (44) zum Ausrichten eines Wellenstrangs (2) einer Maschinenanlage (1), mit mindestens einem Sensor (21, 23), der ortsfest an einer ihm zugeordneten Position des Wellenstrangs (2), der mittels mehrerer Lager gelagert ist, an einer Messstelle (15 bis 20) angeordnet ist und eingerichtet ist Biegewechselspannungs-Messwerte des Wellenstrangs (2) im Betrieb aufzunehmen, einer Auswerteeinheit (42), die eingerichtet ist aus den aufgenommenen Biegewechselspannungs-Messwerten mindestens eine Position eines der Lager des Wellenstrangs (2) zu errechnen und zusätzlich eingerichtet ist die tatsächliche Position des Lagers mit mindestens einem vorher festgelegten dem Lager zugeordneten Grenzwert zu vergleichen, und einer Korrekturvorrichtung, die eingerichtet ist mindestens die tatsächliche Position eines der Lager zu korrigieren, insofern die jeweilige tatsächliche Position des jeweiligen Lagers außerhalb des jeweiligen mindestens einen Grenzwerts liegt, sodass die jeweilige neue Position des Lagers innerhalb des jeweiligen mindestens einen Grenzwerts liegt.
